(19) Europäisches Patentamt
European Patent Office
Office européen des brevets

(11) **EP 2 911 365 B1**

(12) **FASCICULE DE BREVET EUROPEEN**

(45) Date de publication et mention
de la délivrance du brevet:
**02.08.2017 Bulletin 2017/31**

(51) Int Cl.:
*H04L 29/06* (2006.01)    *H04W 4/00* (2009.01)
*H04W 12/06* (2009.01)    *G06Q 20/38* (2012.01)

(21) Numéro de dépôt: **15156138.8**

(22) Date de dépôt: **23.02.2015**

(54) **Procédé et système de sécurisation de transactions offertes par une pluralité de services entre un appareil mobile d'un utilisateur et un point d'acceptation**

Verfahren und System zur Sicherung von Transaktionen, die von einer Vielzahl von Diensten zwischen einem Mobilgerät eines Benutzers und einer Akzeptanzstelle angeboten werden

Method and system for protecting transactions offered by a plurality of services between a mobile device of a user and an acceptance point

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2014 FR 1451469**

(43) Date de publication de la demande:
**26.08.2015 Bulletin 2015/35**

(73) Titulaire: **Dejamobile**
**14200 Herouville Saint Clair (FR)**

(72) Inventeurs:
• **Assadi, Houssem**
**14200 Herouville Saint Clair (FR)**

• **Bakhta, Abdelhamid**
**14200 Herouville Saint Clair (FR)**
• **Decourval, Sylvain**
**14200 Herouville Saint Clair (FR)**

(74) Mandataire: **Le Guen-Maillet**
**5, place de Newquay**
**BP 70250**
**35802 Dinard Cedex (FR)**

(56) Documents cités:
**US-A1- 2005 283 444    US-A1- 2014 025 581**

## Description

La présente invention concerne un procédé de sécurisation de transactions offertes par une pluralité de services entre un appareil mobile d'un utilisateur et un point d'acceptation. Ces transactions se déroulent par transmission de données de l'appareil mobile vers le point d'acceptation et réciproquement, et ce par une liaison sans fil.

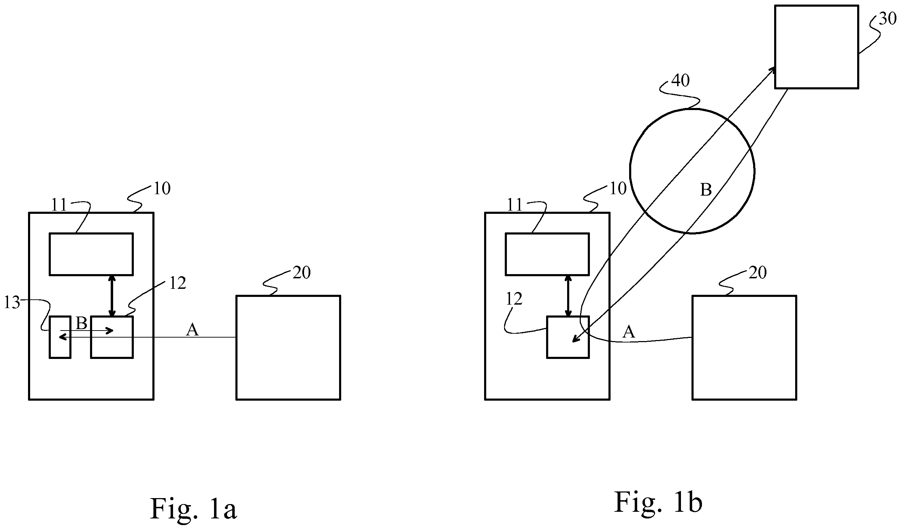

A la Fig. 1a, on a représenté un système de transaction constitué d'un appareil mobile 10, tel qu'un téléphone ou un terminal mobile, qui, lorsqu'il est approché à faible distance (de l'ordre de quelques centimètres à quelques dizaines de mètres) d'un point d'acceptation 20, échange des données avec lui par une liaison sans fil. Par exemple, cette liaison sans fil est du type dit NFC (Near Field Communication) et assure des transmissions selon le protocole de transmission normalisé ISO/IEC 14443-4. Par le moyen de cet échange de données, l'appareil mobile 10 peut mettre en oeuvre des transactions à l'instar des cartes à puce (smart card) tel que cela est normalisé dans les normes ISO/IEC 7816.

Classiquement, l'appareil mobile 10 comporte une unité centrale 11 qui pilote, en autres, un composant de gestion de communications 12 pour contrôler la liaison sans fil qui est établie entre l'appareil mobile 10 et le point d'acceptation 20. Pour assurer la sécurité des échanges de données entre l'appareil mobile 10 et le point d'acceptation 20 et des transactions qu'ils mettent ainsi en oeuvre, il est connu de pourvoir l'appareil mobile 10 d'un élément de sécurité 13. Les données de sécurité qui transitent sur le lien entre l'appareil mobile 10 et le point d'acceptation 20 sont transférées, par le contrôleur de liaison 12, à l'élément de sécurité 13 où elles sont traitées (flèche A). Elles y sont l'objet d'opérations de sécurité, telles que des opérations d'authentification, de déchiffrement, de vérification de signature, etc. Une fois ces opérations effectuées, l'élément de sécurité 13 commande le contrôleur de liaison 12 (flèche B) et autorise ainsi la poursuite de la transaction.

L'élément de sécurité 13 est généralement un élément matériel qui est soit intégré à la carte mère de l'appareil mobile 10 (on parle alors d'élément de sécurité embarqué [Embedded SE ou eSE]), soit un élément détachable, tel qu'une carte UICC (Universal Integrated Circuit Card : Carte universelle à circuit intégré).

Un tel élément de sécurité engendre des surcoûts qui peuvent être importants et rendent les fournisseurs des services qui utilisent ces transactions entre un appareil mobile et un point d'accès tributaires d'un tiers, soit l'opérateur mobile lorsque l'élément de sécurité est une carte UICC, soit le fabriquant de l'appareil mobile dans le cas d'un élément de sécurité embarqué.

A la Fig. 1b, on a représenté une variante de réalisation d'un système de transaction selon laquelle les fonctions de sécurité assurées, à la Fig. 1a, par l'élément de sécurité 13, sont prises en charge par un serveur de sécurité 30 accessible par l'appareil mobile 10 via un réseau de télécommunication 40. Le serveur de sécurité 30 joue le même rôle que l'élément de sécurité 13 de la Fig. la. Ainsi, les données de sécurité qui transitent sur le lien entre l'appareil mobile 10 et le point d'acceptation 20 sont transférées (flèche A) au serveur de sécurité 30 où elles sont l'objet d'opérations de sécurité, telles que des opérations d'authentification, de déchiffrement, de vérification de signature, etc. Une fois ces opérations effectuées, le serveur de sécurité 30 transmet (flèche B) à l'appareil mobile 10 une autorisation de poursuite de la transaction.

Si cette variante permet de s'affranchir d'éléments de sécurité matériels relativement coûteux, elle nécessite que l'appareil mobile 10 soit connecté au serveur de sécurité 30 au moins pendant le moment de la transaction. En effet, chaque commande du lecteur doit remonter systématiquement au serveur de sécurité 30. Il peut en résulter une dégradation des performances, voire à l'impossibilité d'assurer la transaction en cas d'absence de couverture réseau pour l'appareil mobile 10 et d'impossibilité d'accéder au serveur 30. US2014/002558 A1 décrit un système de gestion de transactions financières utilisant des jetons pré-authentifiés auprès d'un serveur de jetons sécurisés.

La. présente invention a pour objectif de proposer un procédé de sécurisation de transactions utilisées par au moins un service entre un appareil mobile et un point d'acceptation qui soit tel que ledit appareil mobile n'utilise pas un élément de sécurité matériel, ni embarqué dans l'appareil mobile, ni détachable dudit appareil mobile et qui, bien qu'utilisant un serveur de sécurité, n'oblige pas à une connexion permanente de l'appareil mobile audit serveur de sécurité.

Pour ce faire, la présente invention concerne un procédé de sécurisation d'une transaction d'un service entre un appareil mobile d'un utilisateur et un point d'acceptation.

Selon la présente invention, ledit procédé est caractérisé en ce qu'il comporte les étapes suivantes :

- une étape de création, sur un serveur de sécurité auquel ledit appareil mobile a accès via un réseau de télécommunication, d'au moins un jeton pour ledit service S et ledit utilisateur, chaque jeton ayant une valeur TV,

et, pour chaque jeton ainsi créé,

- une étape de chiffrement dudit jeton TV au moyen d'une fonction de chiffrement, dite fonction de chiffrement-point d'acceptation, et d'une clé $K_{PA}$ relative à un point d'acceptation particulier, dite clé de point d'acceptation, et ayant pour résultat un jeton chiffré, dit jeton chiffré-point d'acceptation CTV',
- une étape de transmission, par ledit serveur de sécurité, dudit jeton chiffré-point d'acceptation CTV' audit appareil mobile,
- une étape de stockage dudit jeton chiffré-point d'acceptation CTV' par ledit appareil mobile,

et, lors d'une transaction entre ledit appareil mobile et un point d'acceptation,

- une étape de transmission par ledit appareil mobile du jeton chiffré-point d'acceptation qu'il a précédemment stocké,
- une étape de déchiffrement, par ledit point d'acceptation, dudit jeton chiffré-point d'acceptation précédemment transmis par ledit appareil mobile au moyen d'une fonction de déchiffrement duale de la fonction de chiffrement-point d'acceptation et d'une clé de point d'acceptation relative audit point d'acceptation, ladite étape de déchiffrement résultant en un jeton recouvré,
- une étape de vérification que ledit jeton recouvré est valide pour la transaction.

Selon une autre caractéristique avantageuse de l'invention, ledit procédé, préalablement à l'étape de transmission par ledit serveur de sécurité dudit jeton chiffré-point d'acceptation, comporte une étape de chiffrement d'utilisateur dudit jeton chiffré-point d'acceptation CTV' au moyen d'une fonction de chiffrement-utilisateur et d'un facteur d'authentification propre à l'utilisateur concerné, ayant pour résultat un jeton chiffré-point d'acceptation chiffré-utilisateur CTV; le jeton chiffré-point d'acceptation transmis et stocké est le jeton chiffré-point d'acceptation chiffré-utilisateur, et, préalablement à l'étape de transmission par ledit appareil mobile du jeton chiffré-point d'acceptation, ledit procédé comporte une étape de déchiffrement dudit jeton chiffré-point d'acceptation chiffré-utilisateur qu'il a précédemment stocké, au moyen d'une fonction de déchiffrement duale de la fonction de chiffrement-utilisateur et d'un facteur d'authentification de l'utilisateur dudit appareil mobile.

Selon une autre caractéristique avantageuse de l'invention, à l'étape de création, chaque jeton est créé en relation avec un index fonction du type auquel ledit jeton appartient et, à ladite étape de stockage, ledit jeton chiffré-point d'acceptation est stocké en relation avec ledit index de type de jeton, et ledit procédé comporte en outre

- une étape d'émission audit appareil mobile par ledit point d'acceptation d'une requête de jeton incluant des arguments permettant audit appareil mobile de retrouver un jeton chiffré-point d'acceptation,
- une étape de détermination d'un index de type de jeton par ledit appareil mobile à réception d'une requête de jeton émis par ledit point d'acceptation sur la base des arguments inclus dans ladite requête reçue,
- une étape pour retrouver ledit jeton chiffré-point d'acceptation sur la base dudit index de type de jeton.

La présente invention concerne également un système de transaction du type comportant un appareil mobile et un lecteur susceptibles d'échanger des données entre eux lors d'une transaction, ledit système de transaction comportant en outre un serveur de sécurité auquel ledit appareil mobile a accès via un réseau de télécommunication.

Selon la présente invention, ledit système est caractérisé en ce que

- ledit serveur de sécurité comporte

  - des moyens pour créer au moins un jeton pour ledit service S et ledit utilisateur, chaque jeton ayant une valeur TV,
  - des moyens de chiffrement dudit jeton TV au moyen d'une fonction de chiffrement, dite fonction de chiffrement-point d'acceptation, et d'une clé $K_{PA}$ relative à point d'acceptation particulier, dite clé de point d'acceptation, et ayant pour résultat un jeton chiffré, dit jeton chiffré-point d'acceptation CTV',

  - des moyens de transmission dudit jeton chiffré-point d'acceptation CTV' audit appareil mobile,

- ledit appareil mobile comporte :

  - des moyens de stockage dudit jeton chiffré-point d'acceptation CTV' par ledit appareil mobile, et,
  - des moyens de transmission par ledit appareil mobile du jeton chiffré-point d'acceptation qu'il a précédemment stocké,

- ledit point d'acceptation comporte

  - des moyens pour déchiffrer chaque jeton chiffré-point d'acceptation transmis par ledit appareil mobile au moyen d'une fonction de déchiffrement duale de la fonction de chiffrement-point d'acceptation et d'une clé qui est propre audit point d'acceptation,
  - des moyens pour vérifier que ledit jeton est valide.

Selon une caractéristique avantageuse de l'invention, le système de transaction peut comporter en outre des moyens de transmission par ledit point d'acceptation d'informations relatives aux transactions.

La présente invention concerne encore un appareil mobile d'un utilisateur équipé de moyens de sécurisation de transactions offertes par une pluralité de services entre ledit appareil mobile et un point d'acceptation. Cet appareil est caractérisé en ce que lesdits moyens de sécurisation sont :

- des moyens pour obtenir d'un serveur de sécurité via un réseau de télécommunications, au moins un jeton chiffré-point d'acceptation, le ou chaque jeton chiffré-point d'acceptation étant obtenu en :

- créant un jeton pour un service S et ledit utilisateur, ledit jeton ayant une valeur TV,
- chiffrant ledit jeton TV au moyen d'une fonction de chiffrement-point d'acceptation et d'une clé relative à un point d'acceptation particulier, et

- des moyens de stockage dudit ou de chaque jeton chiffré-point d'acceptation reçu dudit serveur de sécurité,
- des moyens pour transmettre ledit jeton chiffré-point d'acceptation précédemment stocké à un point d'acceptation lorsque ledit appareil mobile est approché dudit pont d'acceptation.

Enfin, la présente invention concerne un programme mémorisé dans une mémoire d'un appareil mobile tel qu'il vient d'être décrit, ledit programme comprenant des instructions ou parties de code pour mettre en oeuvre les étapes prévues pour être exécutées par ledit appareil mobile d'un procédé de sécurisation de transactions offertes par une pluralité de services entre ledit appareil mobile d'un utilisateur et un point d'acceptation tel qui vient d'être décrit, lorsque ledit programme est exécuté par ledit appareil mobile.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

Les Figs. 1a et 1b montrent des systèmes de transaction selon l'état de la technique,
La Fig. 2 montre un système de transaction selon la présente invention,
Les Figs. 3a et 3b sont des diagrammes montrant les différentes étapes d'un procédé de sécurisation selon deux modes de réalisation respectifs de la présente invention ainsi que les différents échanges de données entre un appareil mobile, un point d'acceptation et un serveur de sécurité, et
La Fig. 4 montre des exemples de jetons et d'index de type de jetons conformes à la présente invention.

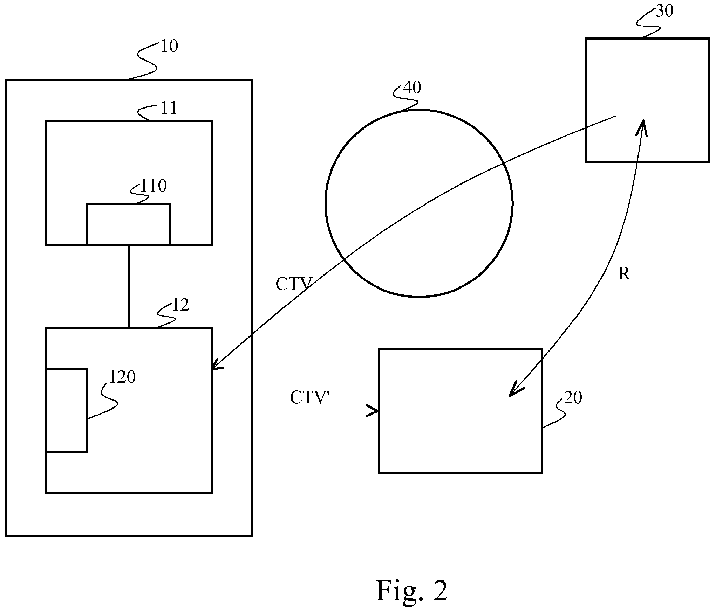

Le système de transaction selon la présente invention permettant à un appareil mobile d'effectuer des transactions avec un point d'acceptation approprié est représenté à la Fig. 2. Il comprend essentiellement ledit appareil mobile 10, ledit point d'acceptation 20 en question et un serveur de sécurité 30. L'appareil mobile 10 est par exemple un téléphone intelligent (Smartphone). Le serveur de sécurité 30 est accessible par l'appareil mobile 10 via un réseau de télécommunications 40, tel qu'un réseau de télécommunications mobile de données, par exemple de type UMTS, LTE, etc. Ils peuvent ainsi échanger des données entre eux. Le point d'acceptation 20 et l'appareil mobile 10 peuvent également échanger des données entre eux, notamment lors de transactions, au moyen d'une liaison sans fil 50 du type dit NFC (Near Field Communications). Enfin, le point d'acceptation 20 et le serveur de sécurité peuvent également échanger des données entre eux (Flèche F), comme on le verra par la suite.

L'appareil mobile 10 est prévu pour mettre en oeuvre une application 11 qui permet à l'utilisateur de bénéficier d'une interface homme-machine avec laquelle il pourra effectuer des transactions avec un point d'acceptation, tel que le point d'acceptation 20, quand il approche ledit appareil mobile 10 à portée dudit point d'acceptation 20.

Pour qu'une telle transaction puisse être exécutée, l'appareil mobile 10 comprend un composant 12 de gestion des communications avec, d'une part, le point d'acceptation 20 et, d'autre part, le serveur de sécurité 30. L'application 11 communique avec le composant 12, par exemple via une interface de programmation applicative API (Application Programming Interface) 110. Cette interface 110 permet au développeur de l'application 11 d'intégrer la fonctionnalité de transaction avec un point d'acceptation 20 sans devoir se préoccuper du fonctionnement interne du composant 12.

Le serveur de sécurité 30 est prévu pour créer des jetons TV, selon des règles de création définies par la politique de gestion de jetons propres aux fournisseurs de service qui mettent en oeuvre le procédé de la présente invention. Le serveur de sécurité 30 est également prévu pour fournir à un appareil mobile 10 des jetons qui sont alors stockés dans une base 120 du composant 12 de l'appareil mobile 10 et qui peuvent ensuite être utilisés lors de transactions avec un point d'acceptation, tel que le point d'acceptation 20. De tels jetons peuvent être acquis par l'appareil mobile 10 une fois pour toutes (ils servent alors à toutes les transactions) ou être acquis et consommés (ils servent alors pour une seule transaction ou un nombre limité de transactions). Comme on le verra dans la suite de la description, les jetons sont fournis par le serveur de sécurité 30 sous une forme chiffrée CTV telle qu'ils ne puissent être déchiffrés que par un point d'acceptation 20 particulier. Ils ne peuvent donc être déchiffrés par l'appareil mobile 10. De même, les jetons fournis au point d'acceptation 20 par l'appareil mobile 10 le sont aussi sous une forme chiffrée CTV'.

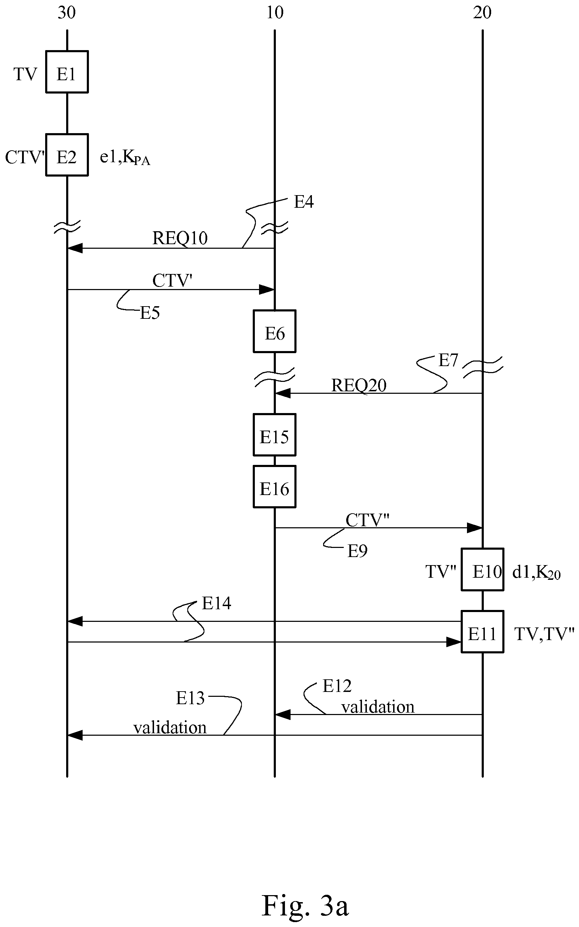

On a représenté à la Fig. 3a un diagramme montrant les différents échanges de données entre le serveur de sécurité 30, l'appareil mobile 10 et le point d'acceptation 20 et, ce, selon un premier mode de réalisation de l'invention.

Un jeton est un objet numérique qui comporte des données TV relatives à un service donné. Il est créé (étape E1) par le serveur de sécurité 30, pour un service S donné d'un fournisseur de service, avec ou sans paramètres, et pour un utilisateur possédant un appareil mobile, tel que l'appareil mobile 10.

Dans une étape E2, le serveur de sécurité 30 exécute une première fonction de chiffrement **e1,** dite par la suite fonction de chiffrement de point d'acceptation, appliquée à un jeton TV, au moyen d'une clé de chiffrement $K_{PA}$ spécifique d'un point d'acceptation particulier, tel que le point d'acceptation 20, parmi un ensemble de points d'acceptation relativement à un service donné. La fonction de chiffrement de point d'acceptation exécutée par le serveur de sécurité 30 a pour résultat un jeton chiffré, dit par la suite jeton chiffré-point d'acceptation CTV' que l'on peut écrire sous la forme:

$$CTV' = e1(TV, K_{PA})$$

On notera que, généralement, la fonction **e1** dépend du service S considéré.

Ainsi, par définition, un jeton chiffré-point d'acceptation CTV' est un jeton, c'est-à-dire un objet numérique, qui a été chiffré au moyen d'une fonction dont les paramètres, par exemple les clefs de chiffrement, sont uniquement spécifiques à un point d'acceptation particulier auquel le jeton chiffré-point d'acceptation est utilisé pour bénéficier du service offert par ce point d'acceptation. Un jeton chiffré-point d'acceptation est donc uniquement spécifique à un point d'acceptation et il n'est pas spécifique à un utilisateur particulier. Il est à noter que pour un service donné, plusieurs types de jeton chiffré-point d'acceptation CTV' peuvent être créés, par exemple pour préciser des paramètres du jeton TV relativement à ce service, comme on le verra par la suite sur des exemples.

Le jeton chiffré-point d'acceptation CTV' est transmis (étape E5) à l'appareil mobile 10 lorsque celui-ci en fait la requête (REQ10 et étape E4) selon une procédure décrite par la suite. Ce jeton y est stocké (étape E6), dans la base de données 120 (voir Fig. 2), sous sa forme chiffrée.

L'étape E1 de création d'un jeton TV et l'étape E2 de chiffrement de celui-ci sont exécutées indépendamment des autres étapes E4, E5 et E6, et, ce, une fois pour un service donné, avec ses paramètres (s'il y en a), ainsi que pour un point d'acceptation particulier.

Les étapes E4, E5 et E6 sont mises en oeuvre par action de l'utilisateur de l'appareil mobile 10 ou périodiquement lors de mises à jour.

Lorsque l'appareil mobile 10 se trouve à proximité d'un point d'acceptation 20, celui-ci requiert (étape E7), sous forme d'une requête de jeton REQ20, un jeton chiffré-point d'acceptation CTV". La requête de jeton REQ20 inclut un certain nombre d'arguments qui permettent à un appareil mobile 10, à la réception de cette requête REQ20, de retrouver le jeton chiffré-point d'acceptation stocké à l'étape E6.

A réception de la requête REQ20, un jeton chiffré-point d'acceptation CTV" est transmis (étape E9) au point d'acceptation 20 où il est déchiffré (étape E10) au moyen d'une fonction de déchiffrement **d1** duale de la fonction de chiffrement de service **e1** et de la clé de chiffrement de point d'acceptation $K_{20}$ utilisée spécifique-ment par le point d'acceptation 20 parmi un ensemble de points d'acceptation, ledit point d'acceptation 20 étant à l'origine de la requête REQ20 de l'étape E7. Le jeton recouvré TV" est alors calculé (étape E11) par:

$$TV'' = d1(CTV'', K_{20})$$

Si ce jeton recouvré TV" est valide selon des règles particulières relatives au service concerné, la transaction est poursuivie jusqu'à son terme. Elle est validée au niveau de l'appareil mobile 10 (étape E12) et, optionnellement, au niveau du serveur 30 (étape E13).

L'étape E11 peut nécessiter, dans certains modes de réalisation de l'invention, l'échange de données avec le serveur de sécurité 30 (étape E14) (voir aussi la liaison optionnelle R prévue à cet effet à la Fig. 2).

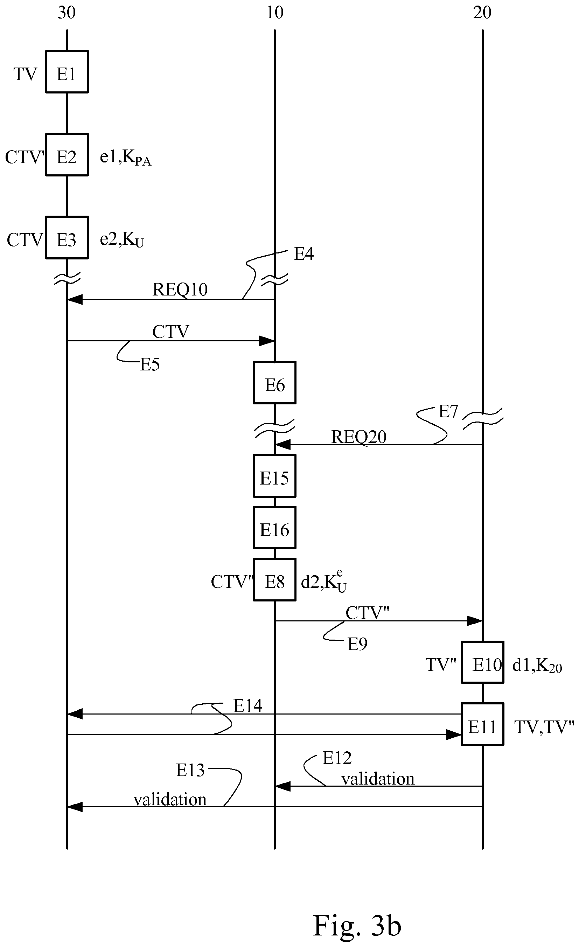

On a représenté à la Fig. 3b, un second mode de réalisation qui diffère du premier mode décrit en relation avec la Fig. 3a en ce qu'il comporte une étape E3 par laquelle le serveur de sécurité 30 exécute une seconde fonction de chiffrement **e2**, dite fonction de chiffrement d'utilisateur, appliquée à un jeton chiffré-point d'acceptation CTV' par un facteur $K_U$ d'authentification de l'utilisateur de l'appareil mobile 10 auquel le jeton est destiné. Ce facteur $K_U$ est par exemple acquis par cet utilisateur lors d'une phase d'enrôlement qui est décrite ci-après. Il peut s'agir d'un mot de passe connu de l'utilisateur. Il résulte de la fonction de chiffrement utilisateur **e2** un jeton chiffré, dit par la suite jeton chiffré-point d'acceptation chiffré-utilisateur CTV qui peut s'écrire sous la forme :

$$CTV = e2(CTV', K_u) = e2(e1(TV, K_{PA}), K_U)$$

Ainsi, un jeton chiffré-point d'acceptation chiffré-utilisateur CTV est un jeton qui a d'abord été chiffré en tant que jeton chiffré-point d'acceptation CTV' et qui a été ensuite chiffré pour le rendre spécifique à un utilisateur particulier, par une fonction dont les paramètres, par exemple un facteur d'authentification tel qu'un mot de passe, sont uniquement spécifiques à l'utilisateur.

C'est ce jeton chiffré-point d'acceptation chiffré-utilisateur CTV qui est transmis, à l'étape E5.

A la réception d'une requête REQ20 formée par un point d'acceptation 20 et transmise à l'appareil mobile 10 dans une étape E7, l'appareil mobile 10, sur la base des arguments contenus dans cette requête de jeton REQ20, retrouve le jeton chiffré-point d'acceptation chiffré-utilisateur CTV qu'il a précédemment reçu du serveur de sécurité 30 et qu'il a stocké lors de l'étape E6, puis, dans une étape E8, le déchiffre. Pour ce faire, il utilise une fonction de déchiffrement **d2** duale de la fonction de chiffrement d'utilisateur **e2** et un facteur d'authentification $K_U^e$ qui est alors soumis à l'étape E8 par l'utilisateur de l'appareil mobile 10. Par exemple, si le facteur d'authentification $K_U^e$ est un mot de passe, celui-ci est entré par l'utilisateur au moyen de l'appareil mobile 10. Ce déchiffrement permet de recouvrer un jeton chiffré-point d'acceptation dont la valeur est donnée par :

$$CTV'' = d2(CTV, K_U^e).$$

Ce jeton chiffré-point d'acceptation CTV'' est transmis (étape E9) au point d'acceptation 20 où il est déchiffré (étape E10) au moyen de la fonction de déchiffrement **d1** et de la clé de chiffrement de point d'acceptation $K_{20}$ utilisée par le point d'acceptation 20 à l'origine de la requête de l'étape E7. Le jeton recouvré TV'' est alors calculé (étape E11) par :

$$TV'' = d1(CTV'', K_{20})$$

Comme précédemment pour le mode de réalisation de la Fig. 3a, si ce jeton chiffré-point d'acceptation TV'' est valide (étape E11) selon des règles particulières relatives au service concerné, la transaction est poursuivie jusqu'à son terme. Elle est validée au niveau de l'appareil mobile 10 (étape E12) et, optionnellement, au niveau du serveur 30 (étape E13).

L'étape E11 peut nécessiter, dans certains modes de réalisation de l'invention, l'échange de données avec le serveur de sécurité 30 (étape E14) (voir aussi la liaison optionnelle prévue à cet effet à la Fig. 2).

Dans le cas de jetons consommables, l'appareil mobile 10 dispose d'un compteur pour compter le nombre de jetons disponibles pour un utilisateur donné, un service donné et un point d'acceptation donné (avec ou sans les options du service). Les étapes E4, E5 et E6 sont mises en oeuvre en fonction d'une règle implémentée dans l'appareil mobile 10. Par exemple, elles sont mises en oeuvre lorsque la valeur de compte donnée par le compteur devient nulle.

Le serveur de sécurité 30 peut être amené à gérer une pluralité de types de jeton différents. Un type de jeton correspond, par exemple, à un service particulier ou une option particulière d'un service particulier. Dans ce cas, les jetons sont créés (étape E1) dans le serveur de sécurité 30 en relation avec un index de type de jeton TKi, avec i = 1 à N pour N types de jeton gérés par le serveur de sécurité 30. Une relation biunivoque, par exemple sous la forme d'une fonction f, est établie entre la valeur d'un index de type de jeton TKi et la valeur du jeton correspondant TVi. Ainsi, on peut écrire :

$$f(TVi) = TKi$$

Lorsque le serveur de sécurité 30 transmet (étape E5) un jeton chiffré-point d'acceptation CTV ou CTV', il le fait en accompagnant ledit jeton chiffré-point d'acceptation de l'index de type TKi correspondant. Ainsi, l'appareil mobile 10 mémorise (étape E6) ledit jeton chiffré-point d'acceptation CTV chiffré ou non utilisateur, selon le cas, en relation avec ledit index de type de jeton correspondant.

De plus, lorsqu'un appareil mobile 10 est approché d'un point d'acceptation 20, ce dernier forme la requête de jeton REQ20 (étape E7) dans laquelle il inclut les arguments propres à la transaction.

A la réception de cette requête REQ20, l'appareil mobile 10, en une étape E15, lit les arguments propres à la transaction qu'elle inclut et en déduit un index de type TKi puis, en une étape E16, muni de cet index de type TKi, trouve (s'il est présent) le jeton chiffré-point d'acceptation qu'il a mémorisé en correspondance à l'étape E6. Eventuellement après une étape E8 de déchiffrement, il transmet (étape E9) le jeton chiffré-point d'acceptation CTV'' correspondant.

Pour illustrer l'invention, deux exemples de mise en oeuvre sont donnés ci-dessous. Par exemple, le serveur de sécurité 30 gère un service S1 de paiement et un service S2 de contrôle d'accès à l'un ou l'autre de deux bâtiments A et B.

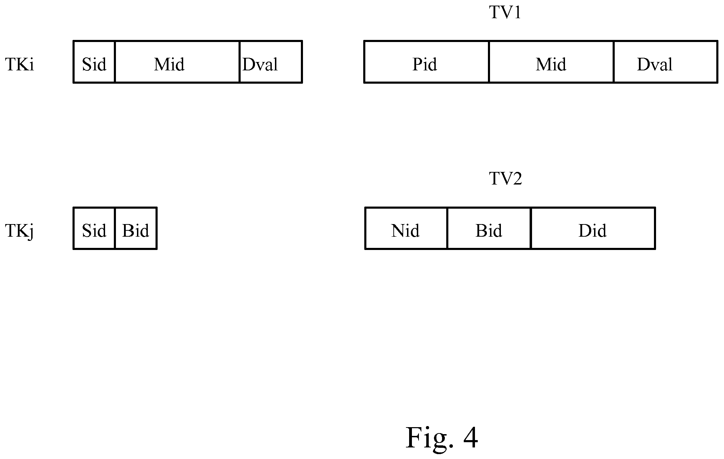

Concernant le service S1, le jeton TV1 peut être structuré comme cela est représenté à la Fig. 4. Il comporte trois champs : un champ Pid d'identifiant de l'utilisateur, un champ de montant maximum autorisé Mid et un champ Dval de date de validité. La valeur TV1 de chaque jeton est la concaténation de ces trois champs. L'index de type de jeton TKi de chaque jeton TV1 du service S1 est fonction des valeurs suivantes : l'identifiant du service S1, du montant maximum autorisé Mid et de la date de validité Dval.

Par exemple, l'identifiant du service S1 est 1234. Le montant maximum autorisé est soit 300, soit 10. La date de validité est soit le 31/12/2013, soit le 19/04/2014.

Concernant le service S2, le jeton TV2 peut être structuré comme cela est représenté à la Fig. 4. Il comporte trois champs : un champ d'identifiant du titulaire Nid, un champ d'identifiant de bâtiment Bid et un champ de date d'expiration Did. La valeur TV de chaque jeton TV2 est la concaténation de ces trois champs. L'index de type TKj de chaque jeton du service S2 est formé d'un identifiant du service S2 et de l'identifiant du bâtiment Bid concerné.

Par exemple, l'identifiant du service S2 est 5678. L'identifiant de bâtiment Bid est soit, A, soit B. Quant à la date d'expiration, elle est soit le 31/12/2013, soit le 30/06/2014.

Considérons une personne qui est abonnée aux services S1 et S2. Elle a pour identifiant XYZ. Elle habite le bâtiment B jusqu'au 31/12/2013. Elle peut effectuer des paiements à hauteur de 10€ jusqu'au 31/12/2013.

Pour le service S1, elle a téléchargé un jeton (sous forme chiffrée) qui peut s'écrire :

TV1 = XYZ1031122013

L'index de type de ce jeton est :

TK1 = 12341031122013

Pour le service S2, elle a téléchargé un jeton (sous forme chiffrée) qui peut s'écrire :

TV2 = XYZB31122013

L'index de type de ce jeton est :

TK2 = 5678B

Elle désire effectuer un paiement pour un montant de 15€. Un point d'acceptation, tel que le point d'acceptation 20, est utilisé pour ce paiement. Après validation par le commerçant de la somme de 15€ en question, le point d'acceptation 20 génère la requête de jeton qui est transmise (étape E7) à l'appareil mobile 10 de la personne.

La requête de jeton inclut, comme arguments, l'identifiant de service, en l'occurrence 1234 et le montant de la transaction, en l'occurrence 15.

A réception de cette requête de jeton, l'appareil mobile 10, sur la base des arguments passés, recherche un jeton pour lequel l'index de jeton est constitué d'un identifiant de service correspondant à l'identifiant de service contenu dans la requête en tant qu'argument, d'un montant maximum autorisé supérieur ou égal au montant de la transaction, et une date de validité postérieure à la date du jour. En l'occurrence, il ne trouvera pas et la transaction est refusée.

Par contre, si le montant de la transaction était de 8€ et la date du jour le 1/12/213, l'appareil mobile trouverait l'index TK1 = 12341031122013 et, par conséquent le jeton correspondant TV1 = XYZ1031122013, sous forme chiffrée.

Dans le mode de réalisation de la Fig. 3b, l'appareil mobile 10 a un jeton chiffré-point d'acceptation chiffré-utilisateur CTV1 et peut alors envoyer au lecteur 20, après un déchiffrement d'utilisateur (étape E8) comme expliqué ci-dessus, un jeton chiffré-point d'acceptation recouvré CTV1". Après déchiffrement de ce jeton CTV1", le lecteur 20 recouvre le jeton TV1 : identifiant du titulaire, montant maximum autorisé, date de validité. La transaction est effectuée.

Considérons que cette personne rentre chez elle. Elle passe devant le point d'acceptation 20 du bâtiment B qui émet alors une requête de jeton contenant l'identifiant de service 1234 et l'identifiant de bâtiment B en tant qu'arguments. A réception de cette requête, l'appareil mobile 10, sur la base desdits arguments, détermine un index de jeton, en l'occurrence 1234B et trouve un jeton chiffré-point d'acceptation chiffré-utilisateur CTV3 qu'il envoie au point d'acceptation 20, après un premier déchiffrement comme expliqué ci-dessus, sous forme d'un jeton chiffré-point d'acceptation recouvré CTV3". Après déchiffrement de ce jeton CTV3", le point d'acceptation 20 recouvre le jeton TV3 : identifiant de bâtiment, identifiant du titulaire et date d'expiration. Après vérification, l'accès est autorisé.

Pour accéder à un service Sj, une personne remplit, au moyen de son appareil mobile 10 ou de tout autre appareil susceptible de communiquer avec le serveur de sécurité 30, un formulaire d'inscription à ce service Sj et le soumet au serveur de sécurité 30. Celui-ci enregistre les informations qui sont contenues dans ce formulaire. Il peut s'agir du nom du bénéficiaire, une adresse (adresse e-mail, par exemple) ou un numéro (numéro de téléphone ou MSISDN) auquel il est possible de communiquer avec le bénéficiaire. En cas d'utilisation d'un mot de passe en tant que facteur d'authentification celui-ci est requis dans le formulaire. Il sera utilisé pour le chiffrement d'utilisateur comme explicité ci-dessus.

Afin de valider l'enregistrement de la personne, le serveur de sécurité 30 peut transmettre un mot de passe à usage unique pw à l'appareil mobile 10, par exemple sous forme d'un e-mail ou d'un SMS (Small Message System) dont les adresses ont été données lors de la transmission du formulaire. Le bénéficiaire, en saisissant ce mot de passe pw et en le transmettant au serveur de sécurité 30, prouve la possession de l'appareil mobile 10. Une fois vérifiée la cohérence des données, le serveur de sécurité 30 valide l'enregistrement de la personne au service Sj concerné.

Pour la récupération par l'appareil mobile 10 de jetons chiffrés-service-utilisateur CTV, par exemple d'un même type de jeton, le processus est le suivant.

L'appareil mobile 10 émet une requête de téléchargement de jetons chiffrés-service-utilisateur à destination du serveur de sécurité 30. Cette requête peut être émise par action de l'utilisateur de l'appareil mobile 10 ou périodiquement lors de mises à jour. A la réception de cette requête, le serveur de sécurité 30 authentifie l'appareil mobile émetteur de la requête et recherche ensuite les jetons chiffrés-service-utilisateur disponibles pour l'utilisateur de cet appareil mobile. Ensuite, ces jetons chiffrés-service-utilisateur sont transmis à l'appareil mobile 10 qui les stocke comme expliqué ci-dessus.

La requête transite par une autorité d'authentification qui procède à une authentification de l'appareil mobile 10 et enrichit la requête avec des données d'authentification. Ce sont ces données d'authentification qui sont utilisées par le serveur de sécurité 30 pour l'authentification de l'émetteur de la requête.

Le composant 12 est par exemple un programme qui est stocké dans une mémoire (non représentée) de l'appareil mobile 10. Lorsque ce programme est exécuté par l'appareil mobile 10, l'étape E4 d'émission d'une requête à des fins de téléchargement de jetons chiffrés-service-utilisateur et l'étape E6 de réception du ou des jetons chiffrés-service-utilisateur transmis par le serveur de sécurité 30 et de mémorisation du ou des jetons dans la base de données 120 sont mises en oeuvre. Comme expliqué ci-dessus, elles peuvent être mises en oeuvre par action de l'utilisateur ou périodiquement pour mise à jour. A la réception de la requête de jetons chiffrés-service recouvré, le programme, lorsqu'il est exécuté, met en oeuvre l'étape E8 de déchiffrement duale de la fonction de chiffrement d'utilisateur et l'étape E9 de transmission, au lecteur 20, du jeton chiffré-point d'acceptation recouvré CTV".

## Revendications

1. Procédé de sécurisation d'une transaction d'un service entre un appareil mobile (10) d'un utilisateur et un point d'acceptation (20), **caractérisé en ce qu'il** comporte les étapes suivantes :

> - une étape (E1) de création, sur un serveur de sécurité (30) auquel ledit appareil mobile (10) a accès via un réseau de télécommunication (40), d'au moins un jeton pour ledit service S et ledit utilisateur, chaque jeton ayant une valeur TV,

> et, pour chaque jeton ainsi créé,

> - une étape (E2) de chiffrement dudit jeton TV au moyen d'une fonction de chiffrement (e1), dite fonction de chiffrement-point d'acceptation, et d'une clé de chiffrement $K_{PA}$ spécifique à un point d'acceptation particulier (20) parmi un ensemble de points d'acceptation, dite clé de point d'acceptation, et ayant pour résultat un jeton chiffré, dit jeton chiffré-point d'acceptation CTV',
> - une étape (E5) de transmission, par ledit serveur de sécurité (30), dudit jeton chiffré-point d'acceptation CTV' audit appareil mobile (10),
> - une étape (E6) de stockage dudit jeton chiffré-point d'acceptation CTV' par ledit appareil mobile (10),

> et, lors d'une transaction entre ledit appareil mobile (10) et un point d'acceptation (20),

> - une étape (E9) de transmission par ledit appareil mobile (10) d'un jeton chiffré-point d'acceptation stocké (CTV"),
> - une étape (E10) de déchiffrement, par ledit point d'acceptation (20), dudit jeton chiffré-point d'acceptation précédemment transmis par ledit appareil mobile (10) au moyen d'une fonction de déchiffrement (d1) duale de la fonction de chiffrement-point d'acceptation (e1) et d'une clé de déchiffrement de point d'acceptation ($K_{20}$) utilisée spécifiquement par ledit point d'acceptation (20), ladite étape de déchiffrement résultant en un jeton recouvré,
> - une étape (E11) de vérification que ledit jeton recouvré est valide pour la transaction.

2. Procédé de sécurisation selon la revendication 1, **caractérisé en ce que**, préalablement à l'étape (E5) de transmission par ledit serveur de sécurité (30) dudit jeton chiffré-point d'acceptation, il comporte une étape (E3) de chiffrement d'utilisateur dudit jeton chiffré-point d'acceptation CTV' au moyen d'une fonction de chiffrement-utilisateur (e2) et d'un facteur d'authentification (PW) propre à l'utilisateur concerné, ayant pour résultat un jeton chiffré-point d'acceptation chiffré-utilisateur CTV, **en ce que** le jeton chiffré-point d'acceptation transmis et stocké est le jeton chiffré-point d'acceptation chiffré-utilisateur, et **en ce que** préalablement à l'étape (E9) de transmission par ledit appareil mobile (10) du jeton chiffré-point d'acceptation, il comporte une étape (E8) de déchiffrement dudit jeton chiffré-point d'acceptation chiffré-utilisateur qu'il a précédemment stocké, au moyen d'une fonction de déchiffrement (d2) duale de la fonction de chiffrement-utilisateur (e2) et d'un facteur d'authentification (PW) de l'utilisateur dudit appareil mobile (10).

3. Procédé de sécurisation selon la revendication 1 ou 2, **caractérisé en ce qu'à** l'étape (E1) de création, chaque jeton est créé en relation avec un index ($TK_i$) fonction du type (i) auquel ledit jeton appartient, **en ce qu'à** ladite étape (E6) de stockage, ledit jeton chiffré-point d'acceptation est stocké en relation avec ledit index de type de jeton ($TK_i$), et **en ce qu'il** comporte en outre

> - une étape (E9) d'émission audit appareil mobile (10) par ledit point d'acceptation (20) d'une requête de jeton (REQ20) incluant des arguments permettant audit appareil mobile (10) de retrouver un jeton chiffré-point d'acceptation,
> - une étape (E15) de détermination d'un index de type de jeton ($TK_i$) par ledit appareil mobile (10) à réception d'une requête de jeton (REQ20) émis par ledit point d'acceptation (20) sur la base des arguments inclus dans ladite requête reçue (REQ20),
> - une étape (E16) pour retrouver ledit jeton chiffré-point d'acceptation sur la base dudit index de type de jeton.

4. Système de transaction du type comportant un appareil mobile (10) et point d'acceptation (20) susceptibles d'échanger des données entre eux lors d'une transaction, ledit système de transaction comportant en outre un serveur de sécurité (30) auquel ledit appareil mobile (10) a accès via un réseau de télécommunication (40), **caractérisé en ce que**

> - ledit serveur de sécurité (30) comporte

>> - des moyens pour créer au moins un jeton pour ledit service S et ledit utilisateur, chaque jeton ayant une valeur TV,

- des moyens de chiffrement dudit jeton TV au moyen d'une fonction de chiffrement, dite fonction de chiffrement-point d'aceptation, et d'une clé de chiffrement $K_{PA}$ spécifique à point d'acceptation particulier parmi un ensemble de point d'acceptation, dite clé de point d'acceptation, et ayant pour résultat un jeton chiffré, dit jeton chiffré-point d'acceptation CTV',

- des moyens de transmission dudit jeton chiffré-point d'acceptation CTV' audit appareil mobile,

- ledit appareil mobile (10) comporte :

- des moyens de stockage dudit jeton chiffré-point d'acceptation CTV' par ledit appareil mobile (10), et,
- des moyens de transmission par ledit appareil mobile d'un jeton chiffré-point d'acceptation stocké, et

- ledit point d'acceptation (20) comporte :

- des moyens pour déchiffrer chaque jeton chiffré-point d'acceptation transmis par ledit appareil mobile (10) au moyen d'une fonction de déchiffrement duale de la fonction de chiffrement-point d'acceptation et d'une clé de déchiffrement de point d'acceptation $(K_{20})$ utilisée spécifiquement par ledit point d'acceptation,
- des moyens pour vérifier que ledit jeton est valide.

5. Système de transaction selon la revendication 4, **caractérisé en ce qu'**il comporte en outre des moyens de transmission par ledit point d'acceptation d'informations relatives aux transactions.

6. Appareil mobile d'un utilisateur équipé de moyens de sécurisation de transactions offertes par une pluralité de services entre ledit appareil mobile (10) et un point d'acceptation (20), **caractérisé en ce que** lesdits moyens de sécurisation sont :

- des moyens pour obtenir d'un serveur de sécurité (30) via un réseau de télécommunications (40), au moins un jeton chiffré-point d'acceptation, le ou chaque jeton chiffré-point d'acceptation étant obtenu en :

- créant un jeton pour un service S et ledit utilisateur, ledit jeton ayant une valeur TV,
- chiffrant ledit jeton TV au moyen d'une fonction de chiffrement-point d'acceptation

et d'une clé de chiffrement spécifique à un point d'acceptation particulier parmi un ensemble de points d'acceptation, et

- des moyens de stockage dudit ou de chaque jeton chiffré-point d'acceptation reçu dudit serveur de sécurité,

- des moyens pour transmettre un jeton chiffré-point d'acceptation stocké à un point d'acceptation lorsque ledit appareil mobile est approché dudit pont d'acceptation.

7. Programme mémorisé dans une mémoire d'un appareil mobile selon la revendication 6, ledit programme comprenant des instructions ou parties de code pour mettre en oeuvre les étapes prévues pour être exécutées par ledit appareil mobile d'un procédé de sécurisation de transactions offertes par une pluralité de services entre ledit appareil mobile d'un utilisateur et un point d'acceptation selon une des revendications 1 à 3, lorsque ledit programme est exécuté par ledit appareil mobile.

**Patentansprüche**

1. Verfahren zur Sicherung einer Transaktion eines Diensts zwischen einem mobilen Gerät (10) eines Benutzers und einer Akzeptanzstelle (20), **dadurch gekennzeichnet, dass** es die folgenden Schritte aufweist:

- einen Schritt (E1) der Erzeugung, auf einem Sicherheitsserver (30), auf den das mobile Gerät (10) über ein Telekommunikationsnetz (40) Zugriff hat, mindestens eines Tokens für den Dienst S und den Benutzer, wobei jedes Token einen Wert TV hat,

und für jedes so erzeugte Token,

- einen Schritt (E2) der Verschlüsselung des Tokens TV mittels einer Verschlüsselungsfunktion (e1), Akzeptanzstelle-Verschlüsselungsfunktion genannt, und eines Verschlüsselungsschlüssels $K_{PA}$ spezifisch für eine besondere Akzeptanzstelle (20) aus einer Gruppe von Akzeptanzstellen, Akzeptanzstellenschlüssel genannt, und der als Ergebnis ein verschlüsseltes Token hat, Akzeptanzstelle-verschlüsseltes Token CTV' genannt,
- einen Schritt (E5) der Übertragung, durch den Sicherheitsserver (30), des Akzeptanzstelle-verschlüsselten Tokens CTV' an das mobile Gerät (10),
- einen Schritt (E6) des Speicherns des Akzeptanzstelle-verschlüsselten Tokens CTV' durch das mobile Gerät (10),

und bei einer Transaktion zwischen dem mobilen Gerät (10) und einer Akzeptanzstelle (20),

- einen Schritt (E9) der Übertragung durch das mobile Gerät (10) eines gespeicherten Akzeptanzstelle-verschlüsselten Tokens (CTV"),
- einen Schritt (E10) der Entschlüsselung, durch die Akzeptanzstelle (20), des vorher vom mobilen Gerät (10) übertragenen Akzeptanzstelle-verschlüsselten Tokens mittels einer dualen Entschlüsselungsfunktion (d1) der Akzeptanzstelle-Verschlüsselungsfunktion (e1) und eines Akzeptanzstelle-Entschlüsselungsschlüssels ($K_{20}$), der spezifisch von der Akzeptanzstelle (20) verwendet wird, wobei der Entschlüsselungsschritt in einem wiedererlangten Token resultiert,
- einen Schritt (E11) der Überprüfung, ob das wiedererlangte Token für die Transaktion gültig ist.

2. Sicherungsverfahren nach Anspruch 1, **dadurch gekennzeichnet, dass** es vor dem Schritt (E5) der Übertragung durch den Sicherheitsserver (30) des Akzeptanzstelle-verschlüsselten Tokens einen Schritt (E3) der Benutzerverschlüsselung des Akzeptanzstelle-verschlüsselten Tokens CTV' mittels einer Benutzer-Verschlüsselungsfunktion (e2) und eines dem betroffenen Benutzer eigenen Authentifizierungsfaktors (PW) aufweist, der als Ergebnis ein Benutzer-verschlüsselte Akzeptanzstelle-verschlüsseltes Token CTV hat, dass das übertragene und gespeicherte Akzeptanzstelle-verschlüsselte Token das Benutzer-verschlüsselte Akzeptanzstelle-verschlüsselte Token ist, und dass es vor dem Schritt (E9) der Übertragung durch das mobile Gerät (10) des Akzeptanzstelle-verschlüsselten Tokens einen Schritt (E8) der Entschlüsselung des Benutzer-verschlüsselte Akzeptanzstelle-verschlüsselten Tokens aufweist, das es vorher gespeichert hat, mittels einer dualen Entschlüsselungsfunktion (d2) der Benutzer-Verschlüsselungsfunktion (e2) und eines Authentifizierungsfaktors (PW) des Benutzers des mobilen Geräts (10).

3. Sicherungsverfahren nach Anspruch 1 oder 2, **dadurch gekennzeichnet, dass** im Schritt (E1) der Erzeugung jedes Token in Verbindung mit einem Index ($TK_i$) abhängig von dem Typ (i) erzeugt wird, zu dem das Token gehört, dass im Schritt (E6) des Speicherns das Akzeptanzstelle-verschlüsselte Token in Verbindung mit dem Token-Typindex ($TK_i$) gespeichert wird, und dass es außerdem aufweist

- einen Schritt (E9) des Sendens an das mobile Gerät (10) durch die Akzeptanzstelle (20) einer Tokenanforderung (REQ20), die Argumente enthält, die es dem mobilen Gerät (10) ermöglichen, ein Akzeptanzstelle-verschlüsseltes Token zu finden,
- einen Schritt (E15) der Bestimmung eines Token-Typindex ($TK_i$) durch das mobile Gerät (10) bei Empfang einer von der Akzeptanzstelle (20) gesendeten Tokenanforderung (REQ20) auf der Basis der in der empfangenen Anforderung (REQ20) enthaltenen Argumente,
- einen Schritt (E16), um das Akzeptanzstelle-verschlüsselte Token auf der Basis des Token-Typindex zu finden.

4. Transaktionssystem von der Art, die ein mobiles Gerät (10) und eine Akzeptanzstelle (20) aufweist, die bei einer Transaktion Daten untereinander austauschen können, wobei das Transaktionssystem außerdem einen Sicherheitsserver (30) aufweist, auf den das mobile Gerät (10) über ein Telekommunikationsnetz (40) Zugriff hat, **dadurch gekennzeichnet, dass**

- der Sicherheitsserver (30) aufweist

  - Einrichtungen zur Erzeugung mindestens eines Tokens für den Dienst S und den Benutzer, wobei jedes Token einen Wert TV hat,
  - Einrichtungen zur Verschlüsselung des Tokens TV mittels einer Verschlüsselungsfunktion, Akzeptanzstelle-Verschlüsselungsfunktion genannt, und eines für eine besondere Akzeptanzstelle aus einer Gruppe von Akzeptanzstellen spezifischen Verschlüsselungsschlüssels $K_{PA}$, Akzeptanzstellenschlüssel genannt, und die als Ergebnis ein verschlüsseltes Token hat, Akzeptanzstelle-verschlüsseltes Token CTV' genannt,
  - Einrichtungen zur Übertragung des Akzeptanzstelle-verschlüsselten Tokens CTV' an das mobile Gerät,

- das mobile Gerät (10) aufweist:

  - Einrichtungen zur Speicherung des Akzeptanzstelle-verschlüsselten Tokens CTV' durch das mobile Gerät (10), und
  - Einrichtungen zur Übertragung durch das mobile Gerät eines gespeicherten Akzeptanzstelle-verschlüsselten Tokens, und

- die Akzeptanzstelle (20) aufweist:

  - Einrichtungen zur Entschlüsselung jedes vom mobilen Gerät (10) übertragenen Akzeptanzstelle-verschlüsselten Tokens mittels einer dualen Entschlüsselungsfunktion der Akzeptanzstelle-Verschlüsselungsfunktion und eines Akzeptanzstelle-Entschlüsselungsschlüssels ($K_{20}$), der spezifisch von der Akzeptanzstelle verwendet wird,
- Einrichtungen zur Überprüfung, dass das Token gültig ist.

5. Transaktionssystem nach Anspruch 4, **dadurch gekennzeichnet, dass** es außerdem Einrichtungen zur Übertragung durch die Akzeptanzstelle von Informationen bezüglich der Transaktionen aufweist.

6. Mobiles Gerät eines Benutzers, das mit Sicherungseinrichtungen von Transaktionen ausgestattet ist, die von einer Vielzahl von Diensten zwischen dem mobilen Gerät (10) und einer Akzeptanzstelle (20) angeboten werden, **dadurch gekennzeichnet, dass** die Sicherungseinrichtungen sind:

   - Einrichtungen zum Erhalt von einem Sicherheitsserver (30) über ein Telekommunikationsnetz (40) mindestens eines Akzeptanzstelle-verschlüsselten Tokens, wobei das oder jedes Akzeptanzstelle-verschlüsselte Token erhalten wird durch:

      - Erzeugen eines Tokens für einen Dienst S und den Benutzer, wobei das Token einen Wert TV hat,
      - Verschlüsseln des Tokens TV mittels einer Akzeptanzstelle-Verschlüsselungsfunktion und eines für eine besondere Akzeptanzstelle aus einer Gruppe von Akzeptanzstellen spezifischen Verschlüsselungsschlüssels, und

   - Einrichtungen zum Speichern des oder jedes vom Sicherheitsserver empfangenen Akzeptanzstelle-verschlüsselten Tokens,
   - Einrichtungen zur Übertragung eines an einer Akzeptanzstelle gespeicherten Akzeptanzstelle-verschlüsselten Tokens, wenn das mobile Gerät der Akzeptanzstelle angenähert wird.

7. Programm, das in einem Speicher eines mobilen Geräts nach Anspruch 6 gespeichert ist, wobei das Programm Anweisungen oder Codeteile enthält, um die Schritte anzuwenden, die vorgesehen sind, um vom mobilen Gerät eines Sicherungsverfahrens von Transaktionen ausgeführt zu werden, die von einer Vielzahl von Diensten zwischen dem mobilen Gerät eines Benutzer und einer Akzeptanzstelle nach einem der Ansprüche 1 bis 3 angeboten werden, wenn das Programm vom mobilen Gerät ausgeführt wird.

**Claims**

1. Method for securing a transaction of a service between a mobile device (10) of a user and an acceptance point (20), **characterized in that** it comprises the following steps:

   - a step (E1) of creation, on a security server (30) to which said mobile device (10) has access via a telecommunication network (40), of at least one token for said service S and said user, each token having a value TV,

   and, for each token thus created,

   - a step (E2) of inscription of said token TV by means of an encryption function (e1), called acceptance point encryption function, and of an encryption key $K_{PA}$ specific to a particular acceptance point (20) out of a set of acceptance points, called acceptance point key, and resulting in an encrypted token, called encrypted acceptance point token CTV',
   - a step (E5) of transmission, by said security server (30), of said encrypted acceptance point token CTV' to said mobile device (10),
   - a step (E6) of storage of said encrypted acceptance point token CTV' by said mobile device (10), and, during a transaction between said mobile device (10) and an acceptance point (20),
   - a step (E9) of transmission by said mobile device (10) of a stored encrypted acceptance point token (CTV"),
   - a step (E10) of decryption, by said acceptance point (20), of said encrypted acceptance point token previously transmitted by said mobile device (10) by means of a decryption function (d1) that is the dual of the acceptance point encryption function (e1) and of an acceptance point decryption key ($K_{20}$) used specifically by said acceptance point (20), said decryption step resulting in a recovered token,
   - a step (E11) of verification that said recovered token is valid for the transaction.

2. Securing method according to Claim 1, **characterized in that**, prior to the step (E5) of transmission by said security server (30) of said encrypted acceptance point token, it comprises a step (E3) of user encryption of said encrypted acceptance point token CTV' by means of a user encryption function (e2) and of an authentication factor (PW) specific to the user concerned, resulting in a user-encrypted encrypted acceptance point token CTV, **in that** the encrypted acceptance point token transmitted and stored is the user-encrypted encrypted acceptance point token, and **in that**, prior to the step (E9) of transmission by said mobile device (10) of the encrypted acceptance point token, it comprises a step (E8) of decryption of said user-encrypted encrypted acceptance point token that it has previously stored by means of a decryption function (d2) that is the dual of the user encryption function (e2) and of an authentication factor (PW) of the user of said mobile device (10).

3. Securing method according to Claim 1 or 2, **characterized in that**, in the step (E1) of creation, each token is created in relation to an index $(TK_i)$ that is a function of the type (i) to which said token belongs, **in that**, in said storage step (E6), said encrypted acceptance point token is stored in relation to said token type index $(TK_i)$, and **in that** it further comprises:

- a step (E9) of transmission to said mobile device (10) by said acceptance point (20) of a token request (REQ20) including arguments enabling said mobile device (10) to retrieve an encrypted acceptance point token,
- a step (E15) of determination of a token type index $(TK_i)$ by said mobile device (10) on reception of a token request (REQ20) transmitted by said acceptance point (20) on the basis of the arguments included in said request received (REQ20),
- a step (E16) for retrieving said encrypted acceptance point token on the basis of said token type index.

4. Transaction system of the type comprising a mobile device (10) and an acceptance point (20) capable of exchanging data between them during a transaction, said transaction system further comprising a security server (30) to which said mobile device (10) has access via a telecommunication network (40), **characterized in that**

- said security server (30) comprises

- means for creating at least one token for said service S and said user, each token having a value TV,
- means for encrypting said token TV by means of an encryption function, called acceptance point encryption function, and of an encryption key $K_{PA}$ specific to a particular acceptance point out of a set of acceptance points, called acceptance point key, and resulting in an encrypted token, called encrypted acceptance point token CTV',
- means for transmitting said encrypted acceptance point token CTV' to said mobile device,

- said mobile device (10) comprises:

- means for said mobile device (10) to store said encrypted acceptance point token CTV', and,
- means for transmission, by said mobile device, of a stored encrypted acceptance point token, and

- said acceptance point (20) comprises:

- means for decrypting each encrypted acceptance point token transmitted by said mobile device (10) by means of a decryption function that is the dual of the acceptance point encryption function and of an acceptance point decryption key $(K_{20})$ used specifically by said acceptance point,
- means for verifying that said token is valid.

5. Transaction system according to Claim 4, **characterized in that** it further comprises means for transmission, by said acceptance point, of information relating to the transactions.

6. Mobile device of a user equipped with means for securing transactions offered by a plurality of services between said mobile device (10) and an acceptance point (20), **characterized in that** said securing means are:

- means for obtaining, from a security server (30) via a telecommunication network (40), at least one encrypted acceptance point token, the or each encrypted acceptance point token being obtained by:

- creating a token for a service S and said user, said token having a value TV,
- encrypting said token TV by means of an acceptance point encryption function and of an encryption key specific to a particular acceptance point out of a set of acceptance points, and

- means for storing said or each encrypted acceptance point token received from said security server,
- means for transmitting a stored encrypted acceptance point token to an acceptance point when said mobile device is close to said acceptance point.

7. Program stored in a memory of a mobile device according to Claim 6, said program comprising instructions or parts of code for implementing the steps designed to be executed by said mobile device of a method for securing transactions offered by a plurality of services between said mobile device of a user and an acceptance point according to one of Claims 1 to 3, when said program is run by said mobile device.

Fig. 1a

Fig. 1b

EP 2 911 365 B1

Fig. 2

Fig. 3a

Fig. 3b

EP 2 911 365 B1

TKi

| Sid | Mid | Dval |
|-----|-----|------|

TV1

| Pid | Mid | Dval |
|-----|-----|------|

TKj

| Sid | Bid |
|-----|-----|

TV2

| Nid | Bid | Did |
|-----|-----|-----|

Fig. 4

**RÉFÉRENCES CITÉES DANS LA DESCRIPTION**

**Documents brevets cités dans la description**

- US 2014002558 A1